# EUROPEAN PATENT APPLICATION

(11) **EP 4 174 702 A1**
(43) Date of publication of application: **03.05.2023**
(21) Application number: 21832546.2
(22) Date of filing: 28.06.2021
(51) Int. Cl.: G06F 21/62, G06F 21/64, G06Q 20/38, H04L 65/40

(54) **PROXY METHOD, DEVICE, AND COMPUTER-READABLE STORAGE MEDIUM**

(30) Priority: 28.06.2020 CN 202010599762
(71) Applicant: ZTE Corporation, Shenzhen, Guangdong 518057 (CN)
(72) Inventor: ZENG, Ming, Shenzhen, Guangdong 518057 (CN); WANG, Dezheng, Shenzhen, Guangdong 518057 (CN); GUO, Haisheng, Shenzhen, Guangdong 518057 (CN); TU, Yaofeng, Shenzhen, Guangdong 518057 (CN); ZHANG, Qiang, Shenzhen, Guangdong 518057 (CN); ZHOU, Zhizhong, Shenzhen, Guangdong 518057 (CN)
(74) Representative: Savi, Massimiliano
(86) International application number: PCT/CN2021/102766
(87) International publication number: WO 2022/001960

(57) **Abstract**

A proxy method, a device, and a computer-readable storage medium are disclosed. The proxy method includes: obtaining transaction data of a user, the transaction data including a transaction request and private data (S100); sending the transaction request to a blockchain platform, completing, by the blockchain platform, a transaction according to the transaction request, and storing the private data locally (S200); and sending the private data to a peer proxy for transaction verification after the transaction is completed (S300).

## Description

### CROSS-REFERENCE TO RELATED APPLICATION

The present application is filed on the basis of Chinese patent application No. 202010599762.3 filed on June 28, 2020, and claims priority of the Chinese patent application, the entire contents of which are incorporated herein by reference.

### TECHNICAL FIELD

The present disclosure relates to the field of computer technologies, and in particular, to a proxy method, a device, and a computer-readable storage medium.

### BACKGROUND

Today's society is in the era of rapid information growth, and data becomes a new commodity. The sharing and trading of data has become a new hot topic in today's technology and business. Conventional transactions often rely on third-party trading centers to conclude transactions, and these trading centers are all regulated and endorsed by trusted institutions. Therefore, a whole transaction process is complex and time-consuming. Data has great differences from conventional commodities, is easy to spread and duplicate, and involves personal and corporate privacy that needs to be kept confidential. Therefore, there are higher requirements for process traceability and data integrity and reliability in data transactions. A trusted, tamper-proof, and traceable transaction means is required to ensure safe data transactions.

Blockchain is a multi-party shared distributed ledger database technology. The core of blockchain technology is chain storage of block data and smart contracts, and data can only be read and written but cannot be modified and deleted. However, a blockchain is a decentralized architecture, in which all nodes participate in bookkeeping and maintain a ledger together. Data on the chain is open to all users. Such a design is not conducive to data privacy protection, and there are data leakage problems if private data is directly placed on the chain. At present, most blockchain platforms still fail to protect privacy data effectively, and there is a risk of privacy leakage. Especially in the technical field of cross-blockchain platforms, there is still a need of unified and effective solution.

### SUMMARY

The following is an overview of the subject matter described in detail herein. This overview is not intended to limit the scope of protection of the claims.

Embodiments of the present disclosure provide a proxy method, a device, and a computer-readable storage medium.

In accordance with an aspect of the present disclosure, an embodiment provides a proxy method, applied to a first proxy, and including: obtaining transaction data of a user, the transaction data including a transaction request and private data; storing the private data locally, and sending the transaction request to a blockchain platform, to enable the blockchain platform to complete a transaction according to the transaction request; and sending the private data to a peer proxy for transaction verification after the transaction is completed.

In accordance with another aspect of the present disclosure, an embodiment provides a proxy method, applied to a second proxy, and including: obtaining private data sent by a peer proxy, the private data being stored in the peer proxy and configured to verify a transaction performed by the peer proxy by sending a transaction request to a blockchain platform; and performing transaction verification on the private data.

In accordance with another aspect of the present disclosure, an embodiment provides a device, including: a memory, a processor, and a computer program stored in the memory and executable by the processor which, when executed by the processor, causes the processor to implement the proxy method in the foregoing embodiments.

In accordance with another aspect of the present disclosure, an embodiment provides a computer-readable storage medium storing computer-executable instructions which, when executed by a processor, causes the processor to implement the proxy method in the foregoing embodiments.

Other features and advantages of the present disclosure will be set forth in the subsequent description and, in part, will become apparent from the description or will be understood by carrying out the present disclosure. The objects and other advantages of the present disclosure may be realized and obtained by means of the construction indicated in the description, the claims, and the accompanying drawings.

### BRIEF DESCRIPTION OF DRAWINGS

The accompanying drawings are used to provide a further understanding of the technical schemes of the present disclosure, form part of the description, are used together with the embodiments of the present disclosure to explain the technical schemes of the present disclosure, and do not constitute a limitation to the technical schemes of the present disclosure.
FIG. 1 is a schematic diagram of a system architecture platform according to an embodiment of the present disclosure;
FIG. 2 is a flowchart of a proxy method according to an embodiment of the present disclosure;
FIG. 3 is a flowchart of a proxy method according to another embodiment of the present disclosure;
FIG. 4 is a flowchart of a proxy method according to another embodiment of the present disclosure;
FIG. 5 is a flowchart of a proxy method according to another embodiment of the present disclosure;
FIG. 6 is a flowchart of a proxy method according to another embodiment of the present disclosure;
FIG. 7 is a flowchart of a deployment process according to an embodiment of the present disclosure;
FIG. 8 is a flowchart of a transaction process according to an embodiment of the present disclosure; and
FIG. 9 is a flowchart of a data acquisition process according to an embodiment of the present disclosure.

### DETAILED DESCRIPTION

To make the objectives, technical schemes, and advantages of the present disclosure more comprehensible, the present disclosure is described below in detail with reference to the accompanying drawings and embodiments. It should be understood that the embodiments described herein are merely used to describe the present disclosure rather than limiting the present disclosure.

It should be noted that although the functional module divisions are performed in the device schematic diagrams and the logical sequences are shown in the flowcharts, in some cases it is possible to perform the steps shown or described with a module division different from that in the devices or in an order different from that in the flowcharts. The terms such as "first" and "second" in the description, claims or the foregoing accompanying drawings are only used to distinguish between similar objects, but are not used to describe a specific order or time sequence.

Blockchain is a multi-party shared distributed ledger database technology. The core of blockchain technology is chain storage of block data and smart contracts, and data can only be read and written but cannot be modified and deleted. Blockchain focuses on solving the problem of value transfer in an untrusted network. When data transactions are conducted by utilizing the blockchain technology, trusted and traceable transactions can be ensured, and third-party intervention links can be omitted, thereby improving transaction efficiency. Because a blockchain is a decentralized architecture, all nodes participate in bookkeeping and maintain a ledger together. Data on the chain is open to all users. Such a design is not conducive to data privacy protection, and there are data leakage problems if private data is directly placed on the chain.

Current blockchain platforms still fail to protect privacy data effectively, and there is still a risk of privacy leakage. Especially in the technical field of cross-blockchain platforms, there is no unified and effective solution. The present disclosure provides a proxy method, a proxy node, a device, and a computer-readable storage medium. The method includes: obtaining transaction data of a user, the transaction data including a transaction request and private data; sending the transaction request to a blockchain platform, completing, by the blockchain platform, a transaction according to the transaction request, and storing the private data locally; and sending the private data to a peer proxy for transaction verification after the transaction is completed. In this way, the tamper-proof characteristic of the blockchain technology is used to ensure trusted and traceable transactions, private data is only exchanged between local proxies of two transaction parties, and private data is stored locally, that is, private data is not placed on a chain through a blockchain platform, so that the problem that private data on a blockchain platform is prone to leakage is effectively resolved, transaction security is high, and private data is effectively protected, thereby achieving applicability to cross-blockchain platforms. In addition, it is not necessary to place private data on a chain, so that a large of amount of storage space can be saved.

The technical schemes in the present disclosure will be clearly and completely described below with reference to the accompanying drawings. Apparently, the embodiments described below are some embodiments of the present disclosure rather than all the embodiments.

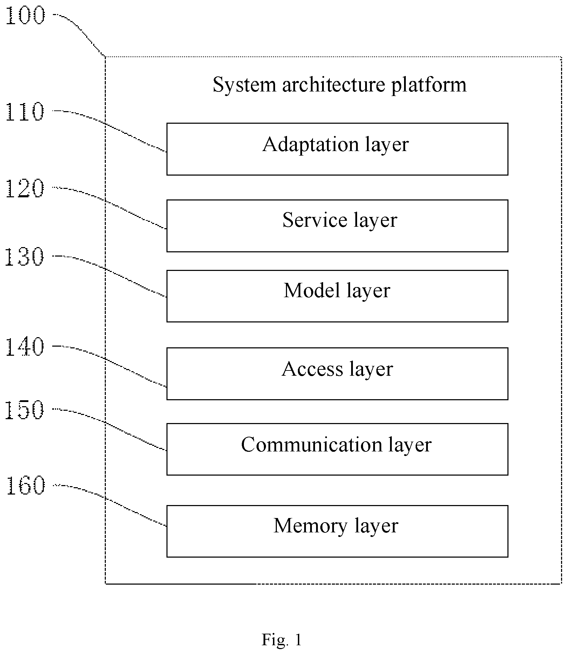

Referring to FIG. 1, FIG. 1 is a schematic diagram of a system architecture platform 100 for performing a proxy method according to an embodiment of the present disclosure.

In the embodiment shown in FIG. 1, the system architecture platform 100 includes a service layer 120, a communication layer 150, and a memory layer 160. The service layer 120 is configured to submit a transaction request to a blockchain platform, and notify to store private data. The communication layer 150 is configured to establish a communication connection between proxy modules. A database is configured to store private data of a user. During a transaction based on the blockchain platform, transaction data of a user is obtained, the transaction data including a transaction request and private data. The transaction request is sent to the blockchain platform by the service layer 120. The blockchain platform completes the transaction according to the transaction request, and the private data is stored locally by the memory layer 160. A communication connection is established with a peer proxy by the communication layer 150 after the transaction is completed, and the private data is sent to the peer proxy for transaction verification, to complete the transaction.

The system architecture platform 100 may be understood as a proxy module performing the proxy method. The proxy module is deployed on a ledger node of the blockchain platform. That is, two transaction parties are connected to the blockchain platform by the proxy module to conduct the transaction. In this way, the tamper-proof characteristic of the blockchain technology is used to ensure trusted and traceable transactions, private data is only exchanged between local proxies of two transaction parties, and private data is stored locally in a proxy mode. Private data is not placed on a chain through a blockchain platform during a transaction, and the private data is completed between proxy modules of two transaction parties, so that the problem that private data on a blockchain platform is prone to leakage is effectively resolved, transaction security is high, and private data is effectively protected. In addition, it is not necessary to place private data on a chain, so that a large of amount of storage space can be saved.

As shown in FIG. 1, the structure of a proxy module is used as an example for description. The proxy module is responsible for connecting a blockchain platform and a local database for a user, to assist the user in securely completing a transaction of private data.

In an implementation, the proxy module includes an adaptation layer 110, a service layer 120, a model layer 130, an access layer 140, a communication layer 150, and a memory layer 160. The adaptation layer 110 is configured to adapt to differences of different blockchain platform interfaces by encapsulating a unified interface, supporting different consortium blockchain and public and private blockchain platforms such as Hyperledger Fabric, Fisco Bcos, and Ethereum. The service layer 120 is mainly responsible for submitting a transaction to the blockchain platform, and notifying a data management module to store and synchronize private data. The model layer 130 is configured to perform uniform modeling for a smart contract, a transaction, private data, and a configuration to provide support for storage and transactions. The access layer 140 is configured to perform human-computer interaction with users of a transaction in a Cli command line mode to complete transaction proxying and data synchronization. The communication layer 150 communicates with proxy modules of other nodes by means of a gossip protocol, and uses a message queue to buffer messages sent by other proxy modules. The memory layer 160 is configured to store configuration information and private data of the proxy module. Configuration initialization information is used for configuring a type of a blockchain platform that needs to be connected, an address, a port, channel information, a certificate for access, and the like. The private data is encrypted and stored by means of a local database, supporting common databases such as CouchDB and RocksDB.

It needs to be noted that when a transaction is performed on the blockchain platform, the transaction is performed by means of a smart contract. The smart contract is responsible for performing the transaction, recording the transaction, and at the same time completing a transfer operation for score accounts of users of the transaction. It should be understood that the smart contract is a computer protocol intended to propagate, verify or execute a contract in an information-based manner. A blockchain can provide a decentralized trusted environment. Therefore, the smart contract may match the blockchain. That is, the smart contract may be implemented based on a blockchain technology. In addition, the proxy module can provide a unified interface through the adaptation layer 110. In this way, different blockchain platforms can be supported, so that the system architecture platform 100 is applicable to cross-blockchain platforms, and the problem that at present most blockchain platforms have a risk of privacy leakage can be resolved.

The system architecture platform 100 described in the embodiment of the present disclosure and an application scenario are intended to describe the technical schemes in the embodiments of the present disclosure more clearly, but do not constitute a limitation to the technical schemes provided in the embodiments of the present disclosure. Those having ordinary skill in the art should know that as the system architecture platform 100 evolves and new application scenarios emerge, the technical schemes provided in the embodiments of the present disclosure are also applicable to similar technical problems.

It should be understood by those having ordinary skill in the art that the system architecture platform 100 shown in FIG. 1 does not constitute a limitation to the embodiments of the present disclosure, and may include more or fewer components than those shown, or combinations of some components, or different component arrangements.

In the system architecture platform 100 shown in FIG. 1, the adaptation layer 110, the service layer 120, the model layer 130, the access layer 140, the communication layer 150, and the memory layer 160 may coordinate to perform the proxy method.

Based on the foregoing system architecture platform 100, various embodiments of the proxy method of the present disclosure are provided below.

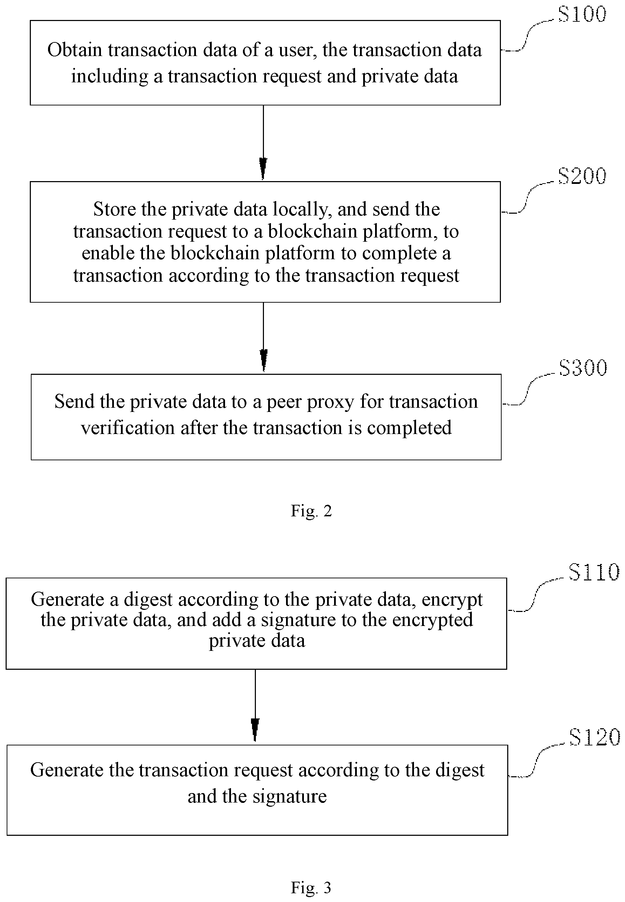

Referring to FIG. 2, FIG. 2 is a flowchart of a proxy method according to an embodiment of the present disclosure. The proxy method includes, but is not limited to, step S100, step S200, and step S300.

At S100, transaction data of a user is obtained, the transaction data including a transaction request and private data.

In an embodiment, a transaction process is implemented based on a blockchain technology. It should be understood that transaction data needs to be generated according to transaction content of a user before a transaction is conducted, and then the transaction data is sent online. The transaction content may be understood as transaction details negotiated by two transaction parties offline. The two transaction parties may exchange accounts and public keys with each other to generate transaction data and encrypt and decrypt the transaction data.

The two transaction parties are connected to a blockchain platform by proxy modules to conduct a transaction. In an implementation, the two transaction parties deploy corresponding proxy modules on a ledger node of the blockchain platform, and complete the transaction through a local proxy module. In the embodiment, the step of obtaining transaction data of a user is performed by means of the proxy modules. The obtained transaction data includes a transaction request and private data. The transaction request may include accounts of the two transaction parties, a transaction time, and the like. The private data includes data of privacy information such as personal identity information.

At S200, the private data is stored locally, and the transaction request is sent to a blockchain platform, to enable the blockchain platform to complete a transaction according to the transaction request.

In an embodiment, the locally storing the private data may be understood as storing the private data by a local proxy module, for example, storing the private data stored by a memory layer of the local proxy module; and sending the transaction request to a blockchain platform may be understood as only sending the transaction request to the blockchain platform without sending private data to the blockchain platform. That is, the private data is not placed on the chain. The blockchain platform performs a corresponding transaction after receiving the transaction request.

It needs to be noted that the transaction request includes data the can be used by the blockchain platform to complete the transaction. The blockchain platform completes the transaction according to the transaction request on the premise that the two transaction parties can be recognized. The private data is not sent to the blockchain platform. Therefore, leakage of private data can be effectively avoided, which is conducive to improving the security of the transaction.

At S300, the private data is sent to a peer proxy for transaction verification after the transaction is completed.

In an embodiment, in step S200, the private data is stored in the local proxy module. The private data is sent to the peer proxy after the transaction is completed on the blockchain platform. The peer proxy may be understood as a proxy corresponding to the opposite party of the transaction. For example, a buyer acts as a data provider, and a proxy of the buyer is a first proxy. A seller acts as a data demander, and a proxy of the seller is a second proxy. During the transaction, the first proxy sends the transaction request to the blockchain platform and stores the private data locally. After the transaction is completed, the first proxy sends the private data to the second proxy for transaction verification. The second proxy may be understood as the peer proxy of the first proxy.

Compared with a conventional transaction method, in the transaction process in this embodiment, private data is not placed on a chain through a blockchain platform, and the private data is directly exchanged between proxies, so that the problem that private data on the blockchain platform is prone to leakage is effectively resolved, transaction security is high, and private data is effectively protected. In addition, it is not necessary to place private data on a chain, that is, on-chain data is isolated from private data, so that the traceability of transactions can be ensured, and the problem that a large amount of storage space is occupied because of placing private data on the chain and privacy leakage can be resolved, thereby effectively resolving the problem of inadequate protection of data privacy on cross-blockchain platforms.

In the embodiment, step S100, step S200, and step S300 are execution procedures of the first proxy, and are steps performed on the side of the data provider of transaction subjects. The step of transaction verification in step S300 is performed on the peer proxy.

Referring to FIG. 3, in an embodiment, in step S 100, before obtaining the transaction data of a user, the method further includes, but is not limited to, following steps:
At 5110, a digest is generated according to the private data, the private data is encrypted, and a signature is added to the encrypted private data.
At S120, the transaction request is generated according to the digest and the signature.

In an implementation, before the transaction data is obtained, a digest is generated according to the private data. The digest may be understood as a content summary of the private data. The private data is encrypted by means of public keys of the two transaction parties, and a signature is added to the encrypted private data by means of the private keys. The public keys may be understood as public keys held by the two transaction parties. The private keys may be understood as keys respectively held by the two transaction parties. A provider of the transaction data adds a signature to the private data by means of the private key of the provider. The identity of the data provider can be verified by means of the signature.

It should be understood that the locally stored private data is data that has been encrypted and provided with a signature, to ensure the security of the private data. The transaction request is generated according to the digest and the signature. That is, the transaction request includes the digest and the signature, but not is limited to, the digest and the signature only. For example, the transaction request may further include accounts of the two transaction parties and the like. A local proxy sends the transaction request including the digest and the signature to the blockchain platform. The blockchain platform initiates the transaction and completes a transaction ledger between two proxies by means of a smart contract. The transaction ledger includes information of the digest and the signature of the private data. In this way, it can be ensured that transactions are traceable, so that the security is higher.

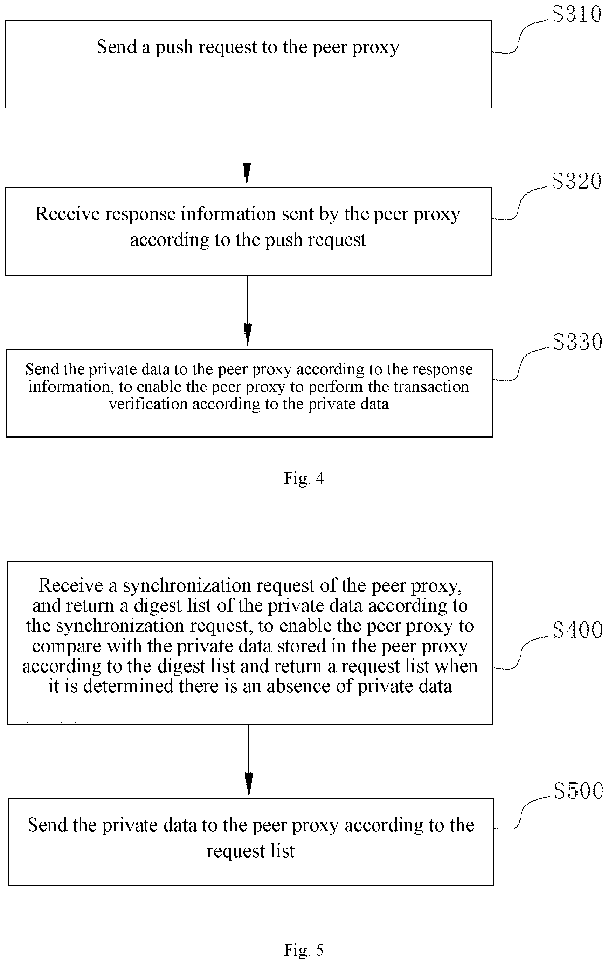

Referring to FIG. 4, in an embodiment, sending the private data to a peer proxy for transaction verification after the transaction is completed in step S300 further includes, but is not limited to, following steps:
At S310, a push request is sent to the peer proxy.
At S320, response information sent by the peer proxy according to the push request is received.
At S330, the private data is sent to the peer proxy according to the response information, to enable the peer proxy to perform the transaction verification according to the private data.

After the local proxy module completes placing the transaction on the chain by means of the blockchain platform, the proxy module of the data provider initiates a push procedure of the private data to the proxy module of the data demander.

In an implementation, the first proxy acts as a sending side of the private data and proxies for the data provider. The second proxy acts as a receiving side of the private data and proxies for the data demander. This example is used for description, including, but not limited to, following steps:
At S311, the first proxy establishes a Transport Layer Security protocol (TLS) link with the second proxy, and initiates the push request, to enable the second proxy to return a consent response according to the push request and return a request random number.
At S321, the first proxy receives the response information of the second proxy, and pushes the private data, including a push turnover and digest information to the second proxy.
At S331, the first proxy sends an end message to the second proxy after the private data has been pushed.

Parameters of the push request include an ID of the first proxy, a channel number, an account of a receiver, a transaction ID, and a random number. If there are a large amount of private data to be pushed, the private data may be sent in packets. In addition, after the private data has been pushed, the second proxy verifies and locally stores the private data, to complete sending of the private data.

It needs to be noted that the first proxy sends the private data to the second proxy by means of a Gossip protocol. The Gossip protocol is a protocol widely used in a distributed system, and is mainly used to implement information exchange between distributed nodes or processes. The Gossip protocol simultaneously satisfies requirements of low load, high reliability, and scalability required by an application layer multicast protocol.

Referring to FIG. 5, in an embodiment, the proxy method further includes, but is not limited to, following steps:
At S400, a synchronization request of the peer proxy is received, and a digest list of the private data is returned according to the synchronization request, to enable the peer proxy to compare with the private data stored in the peer proxy according to the digest list and return a request list when it is determined that there is an absence of private data.
At S500, the private data is sent to the peer proxy according to the request list.

The synchronization request may be understood as a synchronization request of the private data. Because there is a data loss or a sending failure in a sending process of the private data, to ensure the storage consistency of the private data in proxies of the two transaction parties and satisfy the requirements of transaction verification, after the private data has been sent, the peer proxy initiates the synchronization request.

A synchronization process of the private data is:
At S410, the first proxy receives the synchronization request from the second proxy.
At S420, the first proxy returns, according to the synchronization request, a digest list of private data that satisfy conditions and a request random number, to enable the second proxy to compare the digest with the digest of the private data stored in the second proxy to determine an absence of private data and enable the second proxy to send the request list to the first proxy.
At S510, the first proxy sequentially pushes the private data to the second proxy according to the request list.
At S520, the first proxy sends a push end message to the second proxy after all private data has been pushed.

Information of the synchronization request includes a proxy ID, a range filtering parameter (for example, time, an account, a transaction ID, or the like) of synchronization data, and a random number (labeling this request). The second proxy sends the synchronization request of the private data to the first proxy through a TLS link. In addition, after the private data has been pushed, the second proxy verifies and locally stores the private data.

It needs to be noted that all proxies perform a synchronization procedure of private data periodically. That is, in the embodiment, the first proxy periodically receives the synchronization request of the second proxy, thereby effectively resolving the problem of a loss of private data.

In an embodiment, the proxy method further includes, but is not limited to, following steps:
At S600, the private data is deleted when a storage time of the private data exceeds a preset storage time.

It should be understood that the private data is stored on the local proxy module. For example, the private data of the first proxy is stored on the proxy module of the first proxy. The private data of the second proxy is stored on the proxy module of the second proxy. The proxy module periodically clears locally stored private data, to ensure that the proxy module has a sufficient storage space.

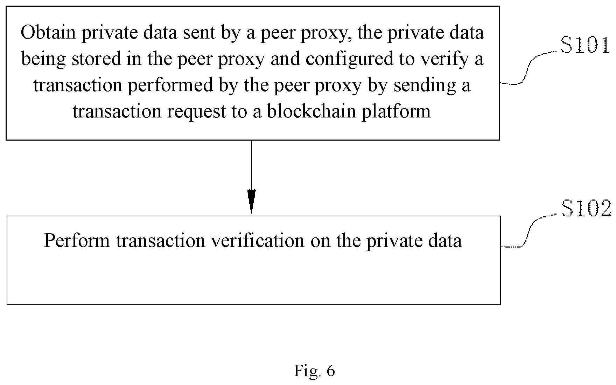

FIG. 6 shows a proxy method according to another embodiment of the present disclosure. The proxy method includes steps performed on the side of the data demander of the transaction subjects. The subject performing the steps of the proxy method is the peer proxy in step S300 in the embodiment.

In an implementation, the proxy method includes, but is not limited to, following steps:
At S101, private data sent by a peer proxy is obtained, the private data being stored in the peer proxy and configured to verify a transaction performed by the peer proxy by sending a transaction request to a blockchain platform.
At S201, transaction verification is performed on the private data.

An example in which the first proxy proxies for the data provider and the second proxy proxies for the data demander is used for description. It should be understood that the peer proxy in this embodiment is the first proxy. The second proxy obtains private data sent by the first proxy and performs transaction verification on the private data. For a procedure in which the first proxy sends the private data to the second proxy, reference can be made to the procedure in the embodiment shown in FIG. 2. Details are not described herein again.

In an embodiment, performing transaction verification on the private data in step S201 further includes, but is not limited to, following steps:
At S211, signature verification is performed on the private data, to confirm a user providing the private data.
At S212, the private data is decrypted, and a comparison digest is generated from the decrypted private data, to compare the comparison digest with a digest of the private data of the peer proxy to confirm whether the private data is valid.

In an implementation, the second proxy stores the received private data locally. The data demander obtains the private data through the second proxy, and performs the signature verification on the private data by means of the public key, to confirm the identity of the user providing the private data. For example, if it is verified that the signatures are consistent, it is confirmed that the data provider of the private data is an object of the transaction.

After the signature verification, the second proxy decrypts the private data by means of the private key, and generates the comparison digest from the decrypted private data. The comparison digest may be compared with the digest of the private data sent by the first proxy to determine whether the private data has been tampered with. If the comparison digest is inconsistent with the sent digest, it should be considered that the private data has been tampered with, so that the transaction process is traceable, thereby ensuring the security of the data transaction.

In an embodiment, the proxy method further includes, but is not limited to, following steps:
At S301, a synchronization request is sent to the peer proxy.
At S302, a digest list of the private data returned by the peer proxy according to the synchronization request is received, and the private data is compared with the private data stored in the peer proxy according to the digest list.
At S303, a request list is returned to the peer proxy when it is determined that there is an absence of private data, to enable the peer proxy to send the private data according to request list.

The peer proxy in this embodiment is the first proxy. The second proxy sends the synchronization request to the peer proxy. The first proxy returns the digest list of the private data according to the synchronization request. The second proxy compares the private data with the private data stored in the second proxy according to the digest list, to confirm whether there is an absence of private data. When determining that there is an absence of private data, the second proxy returns a request list to the first proxy, and the first proxy sends the private data according to the request list, to complete a synchronization operation of the private data. In the synchronization procedure, for the step of sending the private data to the second proxy by the first proxy, reference may be made to the procedure shown in step S410 to step S520 in the foregoing embodiment. Details are not described herein again.

It needs to be noted that all proxies perform a synchronization procedure of private data periodically. The second proxy periodically sends the synchronization request to the first proxy, thereby ensuring the consistency of the private data stored in the first proxy and the second proxy.

To describe the procedures of the proxy method in the foregoing embodiments more clearly, two embodiments are used below for description.

### Embodiment one:

An implementation procedure of a transaction of privacy data on a Fabric platform is used as an example, and includes a deployment process, a transaction process, and a data acquisition process.

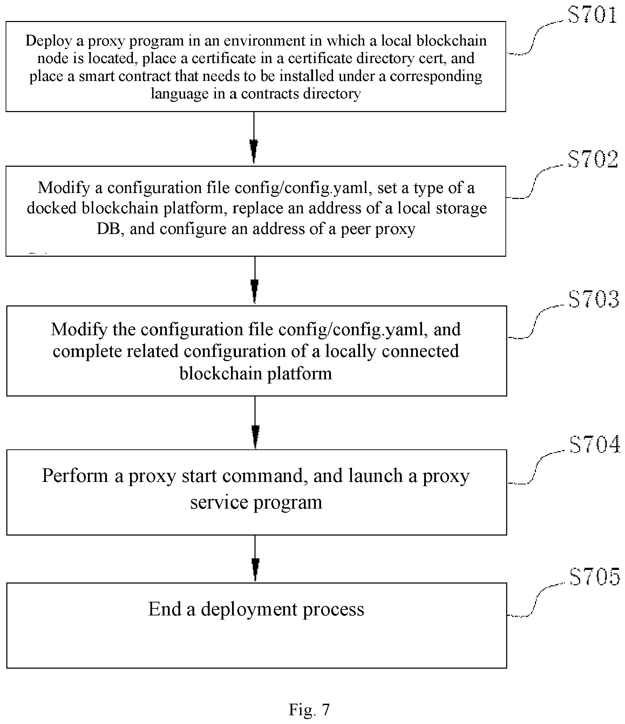

Referring to FIG. 7, the deployment process includes following steps:
At S701, a proxy program is deployed in an environment in which a local blockchain node is located, a certificate is placed in a certificate directory cert, and a smart contract that needs to be installed is placed under a corresponding language in a contracts directory.
At S702, a configuration file config/config.yaml is modified, a type of a docked blockchain platform is set, an address of a local storage DB is replaced, and an address of a peer proxy is configured.
At S703, the configuration file config/config.yaml is modified, and related configuration of a locally docked blockchain platform is completed.
At S704, a proxy start command is performed, and a proxy service program is launched.
At S705, the deployment process is ended.

The fabric platform includes an organization name, peer and orderer addresses, and a certificate configuration.

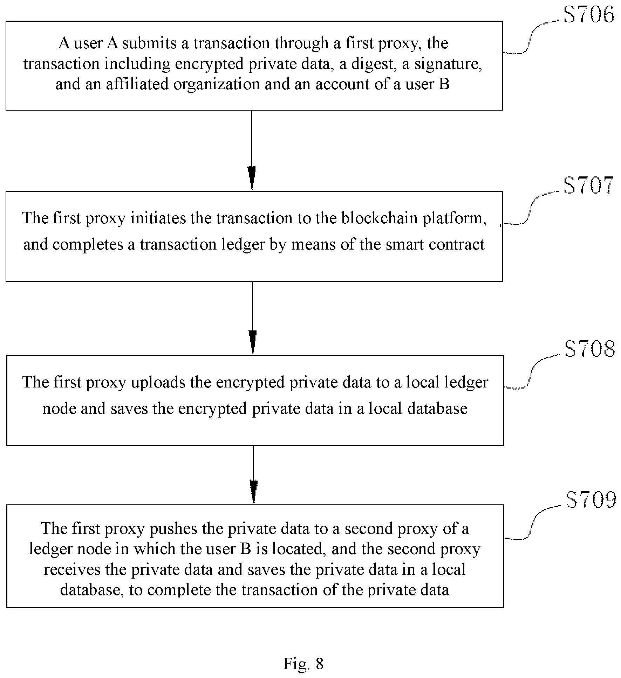

Referring to FIG. 8, the transaction process includes following steps:
At S706, a user A submits a transaction through a first proxy, the transaction including encrypted private data, a digest, a signature, and an affiliated organization and an account of a user B.
At S707, the first proxy initiates the transaction to the blockchain platform, and completes a transaction ledger by means of the smart contract.
At S708, the first proxy uploads the encrypted private data to a local ledger node and saves the encrypted private data in a local database.
At S709, the first proxy pushes the private data to a second proxy of a ledger node in which the user B is located, and the second proxy receives the private data and saves the private data in a local database, to complete the transaction of the private data.

The transaction ledger includes digest information of the private data, to ensure that the transaction is traceable. In addition, the smart contract can automatically complete a score deduction operation for the user B and a score addition operation for the user A.

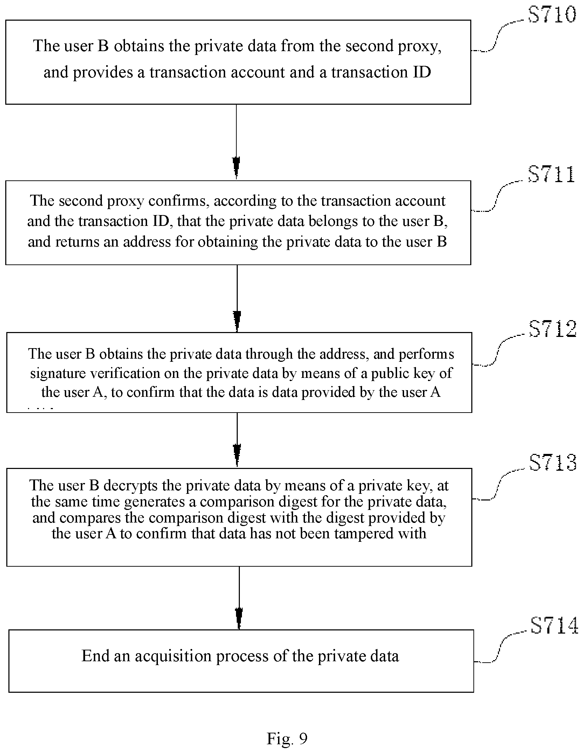

Referring to FIG. 9, the data acquisition process includes following steps:
At S710, the user B obtains the private data from the second proxy, and provides a transaction account and a transaction ID.
At S711, the second proxy confirms, according to the transaction account and the transaction ID, that the private data belongs to the user B, and returns an address for obtaining the private data to the user B.
At S712, the user B obtains the private data through the address, and performs signature verification on the private data by means of a public key of the user A, to confirm that the data is data provided by the user A.
At S713, the user B decrypts the private data by means of a private key, at the same time generates a comparison digest for the private data, and compare the comparison digest with the digest provided by the user A to confirm that data has not been tampered with.
At S714, the acquisition process of the private data is ended.

### Embodiment two:

An implementation procedure of a transaction of cross-platform (Fabric-Fscio) privacy data is used as an example, and includes a deployment process, a transaction process, and a data acquisition process.

The deployment process includes following steps:
At S801, a proxy program is deployed in an environment in which a local blockchain node is located, a certificate is placed in a certificate directory cert, and a smart contract that needs to be installed is placed under a corresponding language in a contracts directory.
At S802, a configuration file config/config.yaml is modified, a type of a docked blockchain platform is set, an address of a local storage DB is replaced, and an address of a peer proxy is configured.
At S803, the configuration file config/config.yaml is modified, and related configuration of a locally docked blockchain platform is completed.
At S804, a proxy start command is performed, and a proxy service program is launched.
At S805, the deployment process is ended.

The Fabric platform includes an organization name, peer and orderer addresses, an encryption algorithm, and a certificate configuration.

The transaction process includes following steps:
At S806, a user A submits a transaction through a first proxy, the transaction including encrypted private data, a digest, a signature, and an affiliated organization and an account of a transaction party B.
At S807, the first proxy initiates the transaction to the blockchain platform, and completes a transaction ledger by means of the smart contract.
At S808, the first proxy uploads the encrypted data to a local blockchain ledger node and saves the encrypted private data in a local database.
At S809, the first proxy pushes the private data to a second proxy of a ledger node in which the user B is located, and the second proxy receives the data and saves the data in a local database, to complete the transaction of the private data.

The transaction ledger includes digest information of the private data, to ensure that the transaction is traceable. In addition, the smart contract can automatically complete a score deduction operation for the user B and a score addition operation for the user A.

The data acquisition process includes the following steps:
At S810, the user B obtains the private data from the second proxy, and provides a transaction account and a transaction ID.
At S811, the second proxy confirms, according to the transaction account and the transaction ID, that the private data belongs to the user B, and returns an address for obtaining the private data to the user B.
At S812, the user B obtains the private data through the address, and performs signature verification on the private data by means of a public key of the user A, to confirm that the data is data provided by the user A.
At S813, the user B decrypts the private data by means of a private key, at the same time generates a comparison digest for the private data, and compares the comparison digest with the digest provided by the user A to confirm that data has not been tampered with.
At S814, the acquisition process of the private data is ended.

In addition, an embodiment of the present disclosure provides a device, including a memory, a processor, and a computer program stored in the memory and runnable on the processor. The processor and the memory may be connected by a bus or in another manner.

As a non-transitory computer-readable storage medium, the memory may be configured to store a non-transitory software program and a non-transitory computer-executable program. Moreover, the memory may include a high-speed random access memory (RAM), and may further include a non-transitory storage, for example, at least one magnetic disk storage device, flash storage device, or other non-transitory solid state storage device. In some implementations, the memory may include a memory disposed remotely with respect to the processor. These remote memories may be connected to the processor by a network. An example of the network includes, but not limited to, the internet, an intranet, a local area network, a mobile communication network, and a combination thereof.

It needs to be noted that a terminal device in this embodiment may include the system architecture platform 100 in the embodiment shown in FIG. 1. The terminal device in this embodiment and the system architecture platform 100 in the embodiment shown in FIG. 1 belong to the same inventive concept. Therefore, these embodiments have the same implementation principle and technical effects. Details are not described again herein.

The non-transitory software program and instructions required to implement the proxy method in the foregoing embodiment are stored in the memory, and perform, when being executed by the processor, the proxy method in the foregoing embodiments, for example, perform the method steps S100 to S300 in FIG. 2, the method steps S110 and S120 in FIG. 3, the method steps S310 to S330 in FIG. 4, the method steps S400 and S500 in FIG. 5, the method steps S100 and S 102 in FIG. 6, the method steps S701 to S705 in FIG. 7, the method steps S706 to S709 in FIG. 8, the method steps S710 to S714 in FIG. 9 described above.

The apparatus embodiments described above are only schematic. The units described as separate parts may or may not be physically separate, that is, may be located in one position, or may be distributed on a plurality of network units. Some or all of the modules may be selected according to actual needs to achieve the objectives of the solutions in the embodiments.

In addition, an embodiment of the present disclosure provides a computer-readable storage medium storing computer-executable instructions, which,, when executed by one processor or controller, for example, executed by one processor in the foregoing terminal device embodiments, the foregoing processor to perform the proxy method in the foregoing embodiments, for example, perform the method steps S100 to S300 in FIG. 2, the method steps S110 and S120 in FIG. 3, the method steps S310 to S330 in FIG. 4, the method steps S400 and S500 in FIG. 5, the method steps S100 and S102 in FIG. 6, the method steps S701 to S705 in FIG. 7, the method steps S706 to S709 in FIG. 8, the method steps S710 to S714 in FIG. 9 described above.

An embodiment of the present disclosure includes: obtaining transaction data of a user, the transaction data including a transaction request and private data; sending the transaction request to a blockchain platform, completing, by the blockchain platform, a transaction according to the transaction request, and storing the private data locally; and sending the private data to a peer proxy for transaction verification after the transaction is completed. In this way, the tamper-proof characteristic of the blockchain technology is used to ensure trusted and traceable transactions, private data is only exchanged between local proxies of two transaction parties, and private data is stored locally, that is, private data is not placed on a chain through a blockchain platform, so that the problem that private data on a blockchain platform is prone to leakage is effectively resolved, transaction security is high, and private data is effectively protected, thereby achieving applicability to cross-blockchain platforms. In addition, it is not necessary to place private data on a chain, so that a large of amount of storage space can be saved.

It will be understood by those of ordinary skill in the art that all or some of the steps and systems in the methods disclosed above may be implemented as software, firmware, hardware, and appropriate combinations thereof. Some or all of the physical components may be implemented as software executed by a processor, such as a central processing unit, digital signal processor, or microprocessor, or as hardware, or as an integrated circuit, such as a specialized integrated circuit. Such software may be distributed on a computer-readable medium, which may include computer storage media (or non-transitory media) and communication media (or transitory media). As is well known to those of ordinary skill in the art, the term computer storage medium includes volatile and non-volatile, removable and non-removable media implemented in any method or technology for storing information, such as computer-readable instructions, data structures, program modules, or other data. The computer storage media include, but are not limited to, a RAM, a ROM, an EEPROM, a flash memory or other memory technology, a CD-ROM, a digital versatile disc (DVD) or other optical disk storage, magnetic cartridges, magnetic tapes, disk storage or other magnetic storage devices, or any other media that can be used to store desired information and can be accessed by a computer. In addition, it is well known to those of ordinary skill in the art that the communication media typically contain computer-readable instructions, data structures, program modules, or other data in modulated data signals such as carrier waves or other transmission mechanisms, and may include any information delivery medium.

The above is a description of some implementations of the present disclosure, but the present disclosure is not limited to the above implementations. A person skilled in the art may make various equivalent variations or substitutions without violating the scope of the present disclosure, and these equivalent variations or replacements are all included in the scope defined by the claims of the present disclosure.

## Claims

1. A proxy method, which is applied to a first proxy, comprising:
obtaining transaction data of a user, the transaction data comprising a transaction request and private data;
storing the private data locally, and sending the transaction request to a blockchain platform, to enable the blockchain platform to complete a transaction according to the transaction request; and
sending the private data to a peer proxy for transaction verification after the transaction is completed.

2. The proxy method of claim 1, before obtaining transaction data of a user, further comprising:
generating a digest according to the private data, encrypting the private data, and adding a signature to the encrypted private data; and
generating the transaction request according to the digest and the signature.

3. The proxy method of claim 1, wherein sending the private data to a peer proxy for transaction verification after the transaction is completed comprises:
sending a push request to the peer proxy;
receiving response information sent by the peer proxy according to the push request; and
sending the private data to the peer proxy according to the response information, to enable the peer proxy to perform the transaction verification according to the private data.

4. The proxy method of claim 3, wherein sending the private data to the peer proxy according to the response information comprises:
sending the private data to the peer proxy according to the response information by means of a Gossip protocol.

5. The proxy method of any one of claims 1 to 4, further comprising:
deleting the private data in response to a storage time of the private data exceeding a preset storage time.

6. The proxy method of claim 1, further comprising:
receiving a synchronization request of the peer proxy, and returning a digest list of the private data according to the synchronization request, to enable the peer proxy to compare with the private data stored in the peer proxy according to the digest list and return a request list in response to a determination of an absence of private data; and
sending the private data to the peer proxy according to the request list.

7. The proxy method of claim 6, wherein receiving a synchronization request of the peer proxy comprises:
periodically performing receiving of the synchronization request of the peer proxy.

8. A proxy method, which is applied to a second proxy, comprising:
obtaining private data sent by a peer proxy, the private data being stored in the peer proxy and configured to verify a transaction performed by the peer proxy by sending a transaction request to a blockchain platform; and
performing transaction verification on the private data.

9. The proxy method of claim 8, wherein performing transaction verification on the private data comprises:
performing signature verification on the private data, to confirm a user who provides the private data; and
decrypting the private data, and generating a comparison digest from the decrypted private data, to compare the comparison digest with a digest of the private data of the peer proxy to confirm whether the private data is valid.

10. The proxy method of claim 8, further comprising:
sending a synchronization request to the peer proxy;
receiving a digest list of the private data returned by the peer proxy according to the synchronization request, and compare with the private data stored in the peer proxy according to the digest list; and
returning a request list to the peer proxy in response to a determination of an absence of private data, to enable the peer proxy to send the private data according to request list.

11. The proxy method of claim 10, wherein sending a synchronization request to the peer proxy comprises:
periodically performing sending of the synchronization request to the peer proxy.

12. A device, comprising: a memory, a processor, and a computer program stored in the memory and executable by the processor, wherein computer program, when executed by the processor, causes the processor to perform the proxy method of any one of claims 1 to 11.

13. A computer-readable storage medium storing computer-executable instructions which, when executed by a processor, causes the processor to perform the proxy method of any one of claims 1 to 11.
